# EUROPEAN PATENT SPECIFICATION

(11) **EP 4 192 228 B1**
(45) Date of publication and mention of the grant of the patent: **04.09.2024**
(21) Application number: 21752539.3
(22) Date of filing: 30.07.2021
(51) Int. Cl.: A01G 9/029, A01G 13/02, A01C 11/02, A01C 21/00

(54) **PLANTABLE DEVICE FOR PLANTING A PLANT SEED, IN AN AUTONOMOUS PLANTING LAND VEHICLE AND IN A PROCESS FOR PLANTING SEEDS OR PLANT MATERIAL IN RECEPTACLES**
PFLANZBARE VORRICHTUNG ZUM PFLANZEN EINES PFLANZENSAMENS, IN EINEM AUTONOMEN PFLANZFAHRZEUG UND IN EINEM VERFAHREN ZUM PFLANZEN VON SAMEN ODER PFLANZLICHEM MATERIAL IN BEHÄLTERN
DISPOSITIF PLANTABLE POUR LA PLANTATION D'UNE SEMENCE, DANS UN VÉHICULE TERRESTRE AUTONOME DE PLANTATION ET DANS UN PROCÉDÉ DE PLANTATION DE GRAINES OU DE MATÉRIEL VÉGÉTAL DANS DES RÉCEPTACLES

(30) Priority: 04.08.2020 NL 2026212
(43) Date of publication of application: 14.06.2023
(73) Proprietor: Land Life Company B.V., 1092 AD Amsterdam (NL)
(72) Inventor: LÖVENSTEIN, Harrie Maurice, 1078 GA Amsterdam (NL); ASJES, Arnout Jan, 2051 LT Overveen (NL); RUYS, Jurriaan Hendrik, 1017 RM Amsterdam (NL)
(74) Representative: Cramwinckel, Michiel
(86) International application number: PCT/EP2021/071418
(87) International publication number: WO 2022/029032

(56) References cited:
- EP-A1- 2 355 648
- EP-A1- 3 286 998
- GB-A- 2 230 929

## Description

The invention is directed to a plantable device for planting and growing a used in a land vehicle for unmanned usage and in a process for planting plantable material in an area of land.

Such a plantable device is described in FR2707451. This publication describes a container suited for reforestation made from a biodegradable material and is provided with a container part provided with a water storage and an anti-weed shield which extends from the container. A seed may germinate in the container in a greenhouse or nursery environment. Before planting the germinated seed the anti-weed shield is added to the container and the assembled plantable device is positioned in a hole in the soil made by an auger. Rain water may be collected in the water storage and fed to the roots of the plant via a wick by capillary forces.

EP2355648 describes a plantable device for planting and growing a plant. The device has an elongated hollow tubular shroud part which functions as a protective shield for the growing plant and a plantable material at an opposite end.

EP3286998 describes a land vehicle for unmanned usage, comprising a dispenser comprising an inventory of plantable devices for planting and growing a plant, a subsoiler, a plantable device installer and a controller programmed to activate the subsoiler to prepare a planting pit, to select a plantable device from the inventory and position the plantable device in the planting pit.

GB2472039 describes a plantable device suited for planting trees as treelets in a desert environment. The plantable device provides for a treelet to grow in a protective environment. The device is provided with a water capture funnel, a filter to keep out bugs, a dew collection mesh to capture water, a hydrophilic water storage, a dew collection dish, a shading shroud and a clear plastic growth cylinder. The different parts are made of a biodegradable polymer. A growth medium is present which may be solid or liquid nutrients, enzymes, auxins, saprophytic fungi and matrix materials to facilitate access to these nutrients.

WO2015063243 describes a plantable device for a treelet provided with a storage for water, an opening for a treelet in its centre and a shroud to protect the growing tree extending above the surface of the ground.

The prior art plantable devices as described above provide conditions enabling the successful growth of a young tree in its first months or year. A problem with these plantable devices is that they are bulky which does not allow the storage and handling of large quantities of the plantable devices. Furthermore, the preferred young woody plants used in such devices are typically 6 to 24 months old. This results in a logistic problem when wishing to plant in high quantities and wishing to be able to choose the type of plant or plants for a specific project just before planting.

The invention is set out in the appended claims.

It is an object of the disclosure to provide a process for planting plantable material in an area of land that addresses at least one of the above presented problems.

This object is achieved by the following process. Process for planting plantable material in an area of land by performing the following steps,
(a) providing an inventory of numerous plantable devices for planting and growing a plant comprising at a first end of each plantable device an elongated hollow shroud part which functions as a protective shield for the growing plant and at a second end of each plantable device a plug comprising a seed or seeds or micro-propagated plant material,
(b) preparing a planting pit,
(c) selecting a plantable device from the inventory and positioning the plug of the plantable device in the planting pit, wherein the hollow shroud part extends upwardly from the plug above soil,

wherein steps (b) and (c) are repeated at different locations in the area of land for all or part of the remaining inventory of plantable devices,
wherein the plantable device further comprises an anti-weed shield that can adopt a compacted configuration and an expanded configuration.

The plantable device according to the invention can be less bulky than the prior art devices because of the anti-weed shield that can adopt a compacted configuration. Also, the use of plug plantable material in the plug reduces the bulkiness of the device. Each feature independently of the other, and especially in combination, allows for storing and for handling large quantities of the plantable devices. Applicant further found that the plantable device may enhance the germination of the plantable material and the growth of the plant in a self-supporting manner, i.e. without further human intervention. This further allows automated planting in large quantities in large areas without having to water.

Because the plantable device uses plantable material which fits within the plug rather than treelets which may have a length of in the range of 10 to 50 cm, a plantable device is obtained which not only is less bulky but which can be stored and transported in large quantities under conditions which are considerably less stringent as compared to when young plants are stored and transported. A further advantage is that the plantable device can be used in an automated process for positioning and planting numerous plantable devices in a large parcel of land. Further advantages will be described in the following description.

Terms like upper, lower, above, below, horizontal, downward and upward are used in this description to describe the plantable device in its vertical position where the plug is located below the hollow shroud part. The use of these terms are not in any way meant to limit the invention to only plantable devices in such vertical orientation.

Plantable material is to be understood to comprise a single seed or seeds and/or micro-propagated plant material, including artificial embryos. The plantable material is suitably those of a woody plant species, like trees, bushes and woody shrubs.

Suitably the plantable material comprises a seed or seeds, preferably a seed or seeds as present in the plug. The seed or seeds may be dormant and thus require some sort of external treatment, for example scarification, or trigger, like for example a temperature change, to germinate. The seed is preferably coated with substances controlling germination by for example a change in temperature and/or soil humidity. Coating, including encrusting/pelleting techniques, are further advantageous because the obtained seed-pill can have uniform dimensions regardless of the size and shape of the seeds to be coated. For example small and/or light seeds may be coated resulting in dimensions and weight which allow simpler handling. This makes automatic assembly of the plantable device according to this invention easier because the assembly line does not have to be adapted for differently sized seeds. Coating also provides a method to obtain seed-pills with different colours for different plant species thereby enabling easier identification of the seed-pill. The coating may also comprise pesticides which protects the seeds against fungal and/or animal attacks. For examples animals like insects, rodents and wild boars will be less attracted to the coated seeds because they do not smell. Animals may also be deterred by adding a bio-repellent, for example capsaicin, to the coating. The coating also results in that the seeds show less mutual contamination. The coating of seeds of woody plants is suitably performed using techniques known for coating arable, annual crops.

The presence of more than one seed may be advantageous for seeds which do not always germinate. By using more seeds the chances that one or more germinates increases.

The plantable material will suitably be kept within a volume of growth medium here further referred to as substrate. The substrate may comprise of at least one of the following components, peat, in particular black peat, white peat, cocopeat, vermiculite, perlite and/or a biodegradable foam substrate. A suitable example of such a biodegradable foam substrate is described in WO2020117062 and comprises a biodegradable polymer and a nucleating agent, wherein the biodegradable polymer is a polyester and/or an aromatic polymer, and wherein the biodegradable foam substrate includes an open cell structure enabling plant growth. Soil may also be present in the substrate, however, preferably only in small amounts. A binder may be present in the substrate to hold the compounds together. The binder may be a gel forming polymer such as natural gel-forming polymers like for example collagen, gelatine, starch, alginate and agarose.

The use of the substrate enables one to position the plantable material within the plug at the optimal vertical position for the plantable material. The depth at which the plug is positioned in a planting pit is determined by for example the position of the expandable shield. This results in that substantially each plantable device and thus each seed may be planted at substantially the same depth. By varying the position of the seed in the plug it is then further possible to position a seed at its optimal depth for germination while the plantable devices are positioned in a substantial same depth in a planting pit. Such optimal depth per plant type would not be possible when loose seeds would be planted in a typical sowing method in a rural environment.

The substrate may further comprise growth enhancing components, suitably one or more organic and non-organic fertilisers, preferably with slow releasing nutrients. Examples of suitable fertilisers are Osmocote^{®} as obtainable from ICL Specialty Fertilizers and Biovin^{®} as obtainable from Plant Health Cure B.V. The substrate may also comprise a biochar, gypsum as pH regulator and/or soil microbes. Microbes such as for example actinomycetes or ecto mycorrhiza, enhance nutrient availability to plants. Microbes are suitably present in combination with substances which promote microbial activity. Other microbes, which inoculate the plantable material, function as endosymbionts, also referred to as endophytes, which may enhance nutrient uptake, for example endo mycorrhiza, and help plants tolerate abiotic stresses, such as drought and salinity, and decrease biotic stresses by enhancing plant resistance to insects, pathogens and herbivores.

The plug may also comprise means to retain water, for example a volume of water or a volume of water as present as a hydrogel. A hydrogel or any other means which temporarily bind water is preferred over water as such for reasons of ease of storing and transportation. In use, the water contained in such a means will gradually be released to the roots of the plant to enhance the germination and support further growth of the plantable material. Such a hydrogel may be mixed with the substrate or may be present in a different space within the plug than the space taken in by the substrate. Suitably the plug comprises of a layer of substrate comprising the plantable material and a layer of hydrogel which is positioned closer to the second end of the plantable device.

In use the plug will be positioned in the soil and the shroud part will extend above the soil surface. Preferably the elongated body is placed vertically into the soil. The anti-weed shield is preferably in its expanded position when the plantable device is positioned in the soil and preferably covers a part of the surface of the soil surrounding the elongated body. In this way the anti-weed shield not only avoids weeds to grow in the vicinity of the growing plant but also avoids water as present in the soil below the anti-weed shield to evaporate. In use the anti-weed shield may also be used to capture any water as rain and direct the water to the plantable material. When the plantable device is positioned in the soil the plantable material in the plug will start to germinate, optionally after being triggered by an sufficient amount of humidity and/or a change in temperature. Seed material may also be scarified prior to installation within the plug to break dormancy.

The biodegradable materials for the shell of the plug may when degraded act as additional substrate for the growing plant and roots and/or may have bio-repellent activity. Examples of suitable biodegradable materials for the shell of the plug are biologically based biodegradable materials such as paper pulp, wood, compressed wood, optionally in combination with a binder. Examples of suitable biodegradable materials for the shell may also be biodegradable polymers such as for example polylactic acid (PLA). To such biodegradable materials bio-repellent additives may be added to enhance their bio-repellent activity.

When the plantable material germinates the roots of the resulting plant suitably should be allowed to grow in the soil surrounding the plug. The plug is suitably provided with openings for the roots to grow from the interior of the plug into the surrounding soil as will be described in more detail below. The plug suitably comprises a shell defining an interior and an exterior of the plug and wherein the shell is comprised of a biodegradable material and wherein the shell is provided with openings for roots of a plant to grow from the interior to the exterior of the plug. The shell may also be provided with regions of material which degrades quicker than the material of the remaining part of the shell. Such regions may be for example made of paper pulp or polyethylene glycol (PEG) which under influence of water or moist soil conditions may degrade and allow the roots of the plant to grow from the interior to the exterior of the plug. A suitable shell may be made of polylactic acid provided with regions of paper pulp. A plug having a shell comprising regions of material which degrades quicker than the material of the remaining part of the shell may also be provided with openings.

Suitable biodegradable materials for the shell of the plug degrade within 1 to 2 years after planting. Such to support the hollow shroud for a sufficient time and to also allow the roots to grow in the soil. The biodegradable material is so chosen that the shell of the plug degrades fast enough to optimally allow the roots of the plant to grow into the surrounding soil. The biodegradable material should on the other hand be strong enough to protect the contents of the plug when the plantable device is stored and transported. The material should suitably also be strong enough to protect the contents of the plug when the planting device is positioned, for example by pushing, in the soil and strong enough to support the hollow shroud for a sufficient time enabling the plant to grow.

The plug may have an opening to the hollow shroud allowing for example rainwater to enter the plug from above and to allow the plant to enter the hollow shroud when growing. A non-permanent barrier between plug and hollow shroud may also be present, which barrier partly or totally disappears when the plant starts to grow from the plug. A non-permanent barrier may be made of a water soluble material or a biodegradable material and suitably the same biodegradable material as used for the shell of the plug as described above. Such a barrier may also be omitted when the plantable material is comprised within a volume of substrate which avoids that the plantable material and/or substrate may fall out of the plug in the event the device is held upside down.

The plug may be shaped such to facilitate easy insertion of the plantable device into a preferably pre-tilled soil, without damaging the planting material. Further the plug may be shaped such to warrant proper anchorage of the plantable device in the soil, at least until the plant no longer requires the protection of the plantable device to grow further.

The plug may have any shape and suitably a shape which aligns with the connected elongated hollow shroud part. The plug may for example have the shape of a torpedo, wherein the tubular part of the torpedo shape aligns with a tubular shaped hollow shroud part. The plug may also be comprised of a tubular part and a conical part or comprised of a conical part only. The shape may also comprise of a frusto-conical part wherein the lower end of the plug is a circle.

The length of the plug, i.e. the distance between the second end and the point where the plug connects with the hollow shroud, may be in the range of 5 to 30 cm and preferably in the range of 5 to 15 cm. The length of the plug may depend on the type of soil into which the plug is placed and may depend on the local wind conditions. High wind conditions may require a longer plug in order to anchor the device firmly such to avoid that the device falls over. The width, i.e. perpendicular to the elongated direction of the plantable device, diameter when a tubular plug shape part is present, may be in the range of 2 to 10 cm, preferably in the range of 2 to 7 cm and more preferably in the range of 2 to 5 cm. This width applies to the main body of the plug and does not take into account any ridges or other kind of extensions which may present on the external surface of the plug. Preferably a hollow shroud is used having the same largest dimension in the horizontal direction such to align plug and hollow shroud. The width may depend on the type of plantable material present in the plug, wherein larger seeds require a larger width.

The plug may be provided with openings and/or with shell regions which degrade quicker as described above to allow growing roots to enter the surrounding soil as described above. These openings may be simple round or oval shaped openings. These openings may also be slits running for example along the length of the plug or running along the length as a helix or part of a helix. These slits may enclose the plug when stored and transported and open when the plug is positioned in the soil. The slits may open due to the pressure of the growing roots and/or because the slits open when the plug is installed. For example a slit extending in an axial direction, preferably under an angle, such as a helical shaped slit, may open when the plantable device is positioned in the soil while rotating the plantable device along its axis.

The shell may also be provided with local thinner walls which may break open when the roots start to grow. Such local thinner walls may be positioned in the direction of the elongated body of the plantable device. Preferably such local thinner walls are part of a preferred plug design wherein the plug is manufactured as two halves, in the length direction, and wherein the halves may be connected by a living hinge. The two halves may also be separate parts which may be connected to form the plug. A living hinge is a thin flexible hinge made from the same material as the two rigid pieces it connects. For the plug obtained by injection moulding a thinner wall part may be obtained to allow the rigid pieces to bend along the line of the hinge. When the two halves are folded towards each other the plug is formed having a thinner wall part, i.e. the living hinge. The two halves may be connected by a snap fit connection. Such a snap fit connection and living hinge may break open when the roots start to grow. The hollow shroud part may be manufactured in the same manner. Such a design for the plug and preferably also for the hollow shroud part allows simple manufacturing and provides intermediate products which can be efficiently stacked which simplifies its storage and transportation.

The shell may also comprise of more than one part, for example three or four parts, which are held together with a band or string made from a degradable material, like the earlier mentioned polyethylene glycol (PEG). Once the band or string breaks due to water or moist soil the parts of the plug may fall apart thereby allowing the roots to grow from the interior of the plug into the surrounding soil. The different parts may be uniformly shaped segments which when held together with the band or string for the shell.

The plug may be further provided with edges extending externally from the plug which enhance the anchoring of the plantable device in the soil. Such edges may extend in an axial direction and preferably under an angle with the axis of the plantable device. Preferably the shell comprises a surface between two ridges which may comprise the above described slits and/or of the above described material which degrades quicker than the material of the ridges. The slits and/or regions of degradable material will then be present between and run alongside neighbouring edges. The edges will result in a wedging into the soil of a planting pit while turning the plantable device. This will enhance the anchoring of the plantable device in the soil and prevent pull-out or falling over. Such edges may for example be positioned as a helix or part of a helix. The above described helical slits may for example be combined with such helical edges wherein the slits are present between and run alongside neighbouring edges. The helical edges may also be combined with regions of the shell which degrade quicker than the edges. For example the helical edges may be made of polylactic acid and the regions of the shell between the edges made of paper pulp. Even after the paper pulp has degraded the remaining edges will maintain an anchoring function for the plantable device.

Suitably the dimensions of the plug decrease towards the second end and wherein the exterior of the shell is provided with ridges which extend in an axial direction and/or under an angle with the axis of the plantable device and wherein preferably slits are provided between two ridges for forming openings for roots of plant to grow from the interior to the exterior of the plug.

In additions or as an alternative the plug may be provided with an extension at its second end which may function as an anchor. This may be a device which anchors itself in soil when rotated, such as for example a screw, a worm or a corkscrew.

The elongated hollow shroud part functions as a protective shield for the, in use, growing plant. The growing plant can grow upwardly inside the hollow shroud part. For this the hollow shroud is open ended at the first end and suitably open ended at its opposite end. At its opposite end the earlier described barrier with the interior of the plug may be present. This barrier may be part of the plug or may be part of the hollow shroud. The hollow shroud will comprise elongated walls which define the hollow interior of the shroud and the exterior of the shroud.

The shroud protects the micro-propagated plant material or germinating seed and the resulting young plant against desiccating winds and/or high radiation. The shroud further protects the plant against biotic stresses like insects and grazers. The shroud suitably provides an optimal humidity and radiation to the young plant during daytime to achieve optimal growth.

The elongated hollow shroud may have any suitable cross-sectional design, for example triangular, rectangular, for example square, pentagonal, hexagonal, and octagonal, or oval or circular. Preferably the shape of the shroud is such that it aligns with the shape of the plug. Preferably the elongated shroud is tubular having a circular cross-section.

To achieve the above functionalities of the hollow shroud suitably has a length of in the range of 10 to 30 cm. The width of the is suitably at most in the range of 2 to 10 cm, preferably in the range of 2 to 7 cm and more preferably in the range of 2 to 5 cm as also described above for the device. In case of a tubular hollow shroud the width is the diameter of the hollow shroud.

The walls of the shroud are preferably provided with openings for allowing radiation from the sun to reach the leaves of the plant and to allow branches to grow from the hollow shroud part. Ventilation holes also prevent excessive temperature build up within the shroud, while curbing transpiration losses of the growing plantlet. Additionally, the holes facilitate gas exchange in the process of photosynthesis. Suitably less ventilation holes are envisioned in the lower end of the shroud, while at the top larger or more holes are used, reducing wind susceptibility of the shroud and still providing protection against animal attack.

Alternatively or in combination the walls of the shroud may be made of a translucent material allowing radiation from the sun to reach the leaves of the plant. Suitably the translucent material allows photosynthetic active radiation to pass and reach the plant and filters infrared radiation out, thus to prevent excessive temperature build up within the shroud.

Suitably the walls of the hollow shroud are made of a bio-degradable material. Preferably the walls comprise of a material which ensures that the shroud can function as a protective shield for the plants for up to 1 year and even up to 2 years. The biodegradable material may be those as described for the plug above. Other and more preferred biodegradable materials are pulp, such as paper pulp, coated and non-coated carton.

Thus the hollow shroud and/or the expandable anti-weed shield may be made of a biodegradable pulp and/or the plug may comprise a shell made of a biodegradable polymer.

The walls of the hollow shroud preferably comprise weak spots, like for example vertical incision or hinges. Such weak spots are intended to break open to give way to the growing plant. The hollow shroud may be comprised of two or more, for example two, three or four, optionally interconnected parts or segments which can break open. The hollow shroud part is suitably manufactured as two halves, in the length direction, and wherein the halves are connected by a living hinge as described above. When the two halves are folded towards each other the hollow shroud is formed having a thinner wall part, i.e. the living hinge. The two halves may be connected by a snap fit connection. The living hinge and possible the snap fit connection may provide the weak spots which may break open and give way to the growing plant.

The hollow shroud preferably comprises of one or more slow-release bio-repellent additives, including fragrances to protect the growing plants against biotic stresses for example caused by insects and grazers. The slow release bio-repellent additives may be added to the material of the walls of the hollow shroud prior to their manufacture. For example by adding the bio-repellent additives when polymerising the biodegradable polymer of which the walls are comprised of. The bio-repellent additives may also be present as a coating on the walls of the hollow shroud.

Suitably the hollow shroud comprises material which at a first temperature absorbs water from the air and at a second temperature releases water to the interior of the hollow shroud and wherein the first temperature is lower than the second temperature. In this way water can be collected in for example the night and released to the growing plant during daytime. When the seed has not yet germinated this water may also be the external factor to initiate seed germination. Any excess water released to the hollow shroud and which flows to the plug which is not used by the growing plant may be stored in the hydrogel as may be present in the plug and/or flow to the surrounding soil. The material which absorbs water from the air may have an ultrahydrophobic surface, comparable to the surface of a leave of the lotus flower.

In order to enhance the temperature effects as described above it is preferred that the hollow shroud comprises walls having an exterior surface and an interior surface facing the interior of the hollow shroud and wherein the exterior surface is more light reflecting than the interior surface.

The anti-weed shield suitably be rearranged from the compacted configuration and the expanded configuration. In the compacted configuration the shield may be positioned towards the elongated hollow shroud part. In an extended configuration the anti-weed shield suitably rests on the surface of the soil into which the plantable device is positioned, wherein the plug is substantially below this surface and the hollow shroud is substantially above this surface. The shield can be rearranged from a compacted to an extended configuration in many ways, such as folding or by rotating stacked fan parts. The anti-weed shield may be a sheet as folded as an origami umbrella starting from a rectangular sheet. In the middle there will be an opening for connection to the hollow shroud part or to the upper end of the plug. The distance of the edge of the anti-weed shield and connection between anti-weed shield and the hollow shroud part or to the upper end of the plug is suitably in the range of 5 to 50 cm and preferably in the range of 15 to 30 cm. The shape of the shield may be circular or may have any other shape like for example a hexagonal shape.

The anti-weed shield may also function as a means to collect rain water. To enable a flow of water as collected on the shield it is preferred that in the unfolded position the shield is slightly tilde towards the hollow shroud part, for example having a frusto-conical shape. Suitably openings are provided in the plantable device for water collected by the anti-weed shield to enter the hollow shroud and/or the interior of the plug. These openings may be present at the connection between anti-weed shield and the hollow shroud part or at the connection between anti-weed shield and the upper end of the plug.

The anti-weed shield may be slidably connected to the plantable device such that when moved in the direction of the first end it expands similar to an unfolding umbrella. This results in that when the plantable device is positioned in a planting pit the anti-weed shield may unfold when it is moved towards to the first end when contacted with the edges of the planting pit.

The plantable device may also be provided with a flange. This radially extending outwards flange is preferably present at the position along the elongated plantable device where, in use, the surface of the soil be present. Such a flange avoids that the plantable device is positioned too deep in the planting pit. Further it provides some stability to the positioned plantable device. The flange, which may extend up to 5 cm outwards, may be provided with an opening into which a next plantable device releasably fits such that a row of connected plantable devices is obtained. Such a row may be advantageously be used when planting multiple plantable devices.

Preferably the plantable device is provided with a connection means, such as the above described opening in a flange, which enables some sort of releasable connection with another plantable device. This enable one to easily handle such rows or even blocks of plantable devices without having to use crates and the like thereby reducing waste.

The foldable anti-weed shield may be made of a paper based material, a woven textile or a biodegradable polymer. The biodegradable polymer may be shaped to a foldable anti-weed shield by thermoforming and extrusion moulding.

The invention is directed to a process for planting plantable material in an area of land according to claim 5.

The plantable material is to be understood to include seed or seeds and/or micro-propagated plant material, including artificial embryos, which fit in the plug. The plantable material is suitably those of a woody plant species, like trees, bushes and woody shrubs as described above.

The inventory may comprise plantable devices comprising different plantable material, i.e. different plant species and/or different substrates as present in the plug. This allows one to plant different species in one process which is beneficial for the biodiversity and/or use different substrates for the same plant depending on the soil conditions. The plantable devices having different plantable material may be held in separate cartridges as part of the inventory.

The moveable inventory may be a vehicle and preferably a vehicle for unmanned usage as will be described in more detail below. The vehicle preferably performs the entire process. It may be envisaged that step (b) is performed using a different means as the means for performing steps (a) and (c). For example one means, e.g. a vehicle, can perform step (b) and after preparing the planting pit this vehicle places an anti-weed shield around the planting pit and/or sprays an anti-weed chemical around the planting pit. Another vehicle can subsequently place the plantable device in the prepared planting pit. Preferably steps (a)-(c) are performed by the same means, e.g. vehicle.

The planting process is preferably performed in an automatic fashion wherein pre-programmed planting positions for the one or more different plant species and/or substrates are set and wherein a moveable inventory of the numerous plantable devices moves from one programmed planting position to another programmed planting position for performing steps (b) and (c). In such a process use may be made of a digitized planting map, for the one or more different plant species are set. By making use of for example GPS tracking and the digitized planting map the moveable inventory can move from one programmed planting position to another programmed planting position to plant the specific plantable devices.

Suitably the moveable inventory is provided with sensors which can scan the soil surface for unfavourable planting conditions. For example obstacles, like for example rocks, tree stumps and people, may be detected by sensors as part of the moveable inventory. Also non-anticipated local steep conditions and/or slippery conditions could make planting difficult or unfavourable. The pre-programmed planting positions may alter because of unfavourable planting conditions as measured by the moveable inventory when arriving at the pre-programmed planting position and/or that the routing between pre-programmed planting positions may alter because of unfavourable terrain conditions as measured by the moveable inventory. The automatic process is suitably programmed such that when unfavourable conditions are detected a new position is chosen for positioning the plantable device.

The process may also be performed partly manually. For example in situations wherein the moveable inventory, e.g. the vehicle, cannot position the plantable device because of for example challenging conditions like steep slopes manual instructions may be used instead of following the automatic instructions.

Preferably the planting process is performed by a group of more than one of moveable inventories and wherein the unfavourable planting conditions and/or the unfavourable terrain conditions as measured by one moveable inventory is used as input for a reprogrammer to optimise the pre-programmed planting positions and/or the routing from one pre-programmed planting position to a next pre-programmed planting position for the group of moveable inventories.

The one or more moveable inventories may position numerous plantable devices, wherein at least a part of the numerous plantable devices comprise a different plant species than another part of the numerous plantable devices. Suitably the plantable devices are planted according to a pre-programmed position for the different plant species.

In step (a) an inventory of plantable devices is provided. Such an inventory may consist of plantable devices comprising plantable material of one species or where different plantable devices comprise plantable material of different plant species. The plantable devices may even comprise the plantable material for the same plant species while the composition of the substrate is different. This may be applied when the soil conditions, like the acidity of the soil, vary in the area of land. The plantable device is as described above for the plantable device according to this invention. The inventory of plantable devices may be a cartridge holding more than one plantable devices. The design and shape of the plantable devices having plantable material of different plant species does not necessarily be the same. When these designs are different it is preferred that the plantable devices for one species is stored in a holder or cartridge which is different from the holder or cartridge of a plantable devices of a different species. Other identification of which plantable material is comprised in a specific plantable device may be by for example bar code.

As the plantable device is provided with a foldable anti-weed shield as described above for the plantable device according to the invention it is preferred that in step (c) the anti-weed shield is in its folded position.

The plantable device used in this process has a plug and a hollow shroud as described above for the plantable device according to the invention. The plantable device is provided with a foldable anti-weed shield as described above for the plantable device according to the invention.

In step (b) the planting pit is prepared for positioning the plantable device. The planting pit may be prepared by soil preparation involving both subsoiling and surface weeding. Preferably the planting pit is prepared such that substantially no soil is removed from the planting pit and wherein the integrity of the surroundings of the planting pit are maintained to avoid soil erosion. Examples of such methods are soil tillage practices, including rotavating and harrowing. An suitable light or minimal invasive subsoiling technique is by using a single blade auger, optionally provided with an anti-weed disc. Minimal soil displacement by the single blade auger is advantageous because soil remains in the planting pit, while potentially present hardpans are broken to facilitate tree rooting and rain water infiltration and subsurface soil moisture retention. A further advantage is that this technique requires less energy than other techniques and thus reduces electric battery consumption or fuel consumption.

In step (c) a plantable device is selected from the inventory. This may be by picking the first available plantable device in a row of plantable devices or by picking a selected plantable device from an array of plantable devices. The selected plantable device is subsequently handled such that the plug of the plantable device is positioned in the planting pit and wherein the hollow shroud part extends upwardly from the plug above soil. Positioning the plug may be by means of a vertical downward force and/or by rotation. When a plug is used provided with the above described helical ridges rotation will enhance the positioning of the plug in the planting pit.

As the plantable device is provided with an expandable anti-weed shield as described above for the plantable device according to the invention in step (c) the anti-weed shield expands from its compacted position to its expanded position. The expanding of the anti-weed shield suitably takes place when vertically positioning the plantable device or when the plantable devices is positioned in the planting pit. The expanding of the expandable anti-weed shield may be achieved by means of a downward moving part which moves externally along the walls of the hollow shroud and within the space between the folded anti-weed shield and these walls. This will result in that the anti-weed shield expands to its expanded position. Alternatively the above described moving part may be stationary fixed and the plantable device is moved upwards to unfold the foldable anti weed shield and subsequently moved downwards to position the plantable device with an unfolded anti-weed shield in the planting pit. Expanding may also be performed by moving a slidable anti-weed shield to the first position when entering the planting pit while the anti-weed shield expands as described earlier above.

A vehicle for unmanned usage according to claim 1 comprises:
a dispenser comprising an inventory of suitably between 50 and 500 plantable devices for planting and growing a plant,
a subsoiler,
a plantable device installer and
a controller programmed to activate the subsoiler at a pre-programmed planting position to prepare a planting pit, programmed to activate the plantable device installer to select a plantable device from the inventory and position the plantable device in the planting pit and programmed to move the vehicle from one pre-programmed planting position to another pre-programmed planting position after positioning a plantable device and using positioning coordinate data as input, wherein the plantable device as part of the inventory is a plantable device for planting and growing a plant comprising at a first end of the device an elongated hollow shroud part which functions as a protective shield for the growing plant and at a second end a plug comprising one or more seeds and/or micro-propagated plant material,
wherein the plantable device further comprises an anti-weed shield that can adopt a compacted configuration and an expanded configuration and wherein its anti-weed shield is in its compacted configuration. The invention is also directed to the above vehicle for unmanned usage as such. The plantable device is preferably the plantable device according to this invention.

The vehicle may be provided with a reservoir of water which may be provided to the planting pit or to the positioned plantable device. The vehicle may also be provided with one or more reservoirs for plant growth supporting substances like nutrients, and plant protection substances like herbicides, insecticides or bio-repellents. Water is not a plant growth supporting substance under this definition. Such plant growth supporting substances may be provided to the planting pit and/or to its surroundings or to the positioned plantable device. It is however preferred that the plantable device itself is provided with sufficient plant growth supporting substances, like nutrients and/or with slow-release bio-repellent additives such that the vehicle does not have to be provided with separate reservoirs for these fluids. Further the vehicle suitably does not have a reservoir for water. It is envisaged that the use of hydrogel and suitably the design of the plantable device as described above will retain enough rain water for the plant to grow. This not only simplifies the planting process it also reduces the weight the vehicle requires to carry. It is therefore preferred that the vehicle is free from a reservoir of water and more preferably free from a reservoir for nutrients and/or with bio-repellents. Optionally a reservoir for a herbicide is present. This will not be a disadvantage because such a reservoir may be small.

The above described land vehicle enables one to plant numerous plants within a short period of time in an automatic process. Applicants found that in order to plant numerous woody plant species within a short time period in especially a rugged terrain it is preferred to use one or more vehicles for unmanned usage. Not having to carry a human pilot and a reservoir for water allows one to reduce the weight of the vehicle significantly which avoids compression of the soil which is disadvantageous for the growing plants.

The vehicle may have any type of propulsion such as a combustion engine propulsion, for example a diesel engine propulsion, or an electric propulsion. The electric prolusion may be battery based or make use of a fuel cell which may be fuelled by any fuel cell fuel, such as hydrogen, methanol, ammonia. Because the plantable devices may be significantly smaller and lighter than young treelets the amount of energy required to carry and plant a plant will be lower as compared to processes or vehicles used to plant treelets.

The above vehicle is suitably further provided with sensors for detection of obstacles, like for example rocks, tree stumps and people. Suitably also sensors are present to detect unfavourable planting conditions, like for example unsuited soil conditions, steep micro-relief and slippery conditions.

The subsoiler may comprise equipment for soil preparation as described for step (b) above. Examples are a single blade auger, optionally provided with an anti-weed disc. An example of a suitable a single blade auger has a blade diameter of between 50-100 mm and a main axis diameter of between 20-30 mm and with a drilling depth of about 0.5 m and with an optional weed-shaving disc at some distance above the lower end of the auger, for example at about 0.4 m above the lower end of the main auger axis when the drilling depth is 0.5 m. The optional weed-shaving disc may have a disc having a diameter of between 30 and 70 cm. Higher diameters are possible when additional power is available.

The plantable device installer suitably positions the plantable device by means of an injector in the pre-drilled planting pit. This minimizing need for larger diameter drilling and subsequently saving electric power. This injector may be equipped to rotate the plantable device.

The vehicle is suitably further provided with communication means to communicate with one or more other vehicles according to the invention. These communication means enable exchange of the measured in-field nudging data and unfavourable planting conditions and can be used to avoid collision between two vehicles or with other obstacles such as people showing up without prior notice in the area where the vehicles are used..

The controller is suitably programmed to adapt the pre-programmed planting position based on in-field nudging data and unfavourable planting conditions as measured by the vehicle itself or as measured by another vehicle and communicated to the vehicle by means of the communication means. The latter communication may be directly between two vehicles and/or via a base as present in the area where the vehicles are used. The communication means may be radio communication means or satellite communication means.

The above described base may also act as where the vehicles can refuel or recharge their batteries, receive new plantable devices and optionally take in herbicide(s). Such a base may also have one or more operators which can control the one or more vehicles. Controlling may involve manually adapting the pre-programmed planting positions of a single vehicle and manually adapting the routing between pre-programmed planting positions. It may be envisaged that for example one operator situated at one base can control more than 5 vehicles and even up to 20 or more.

The invention is thus also directed to a system comprising of more than one vehicle according to the invention; a base, wherein the base comprises recharging or refuelling an individual vehicle and a base inventory of plantable devices to replenish the inventory of the single vehicle; and communication means for data exchange and for control instructions between the more than one vehicles and the base.

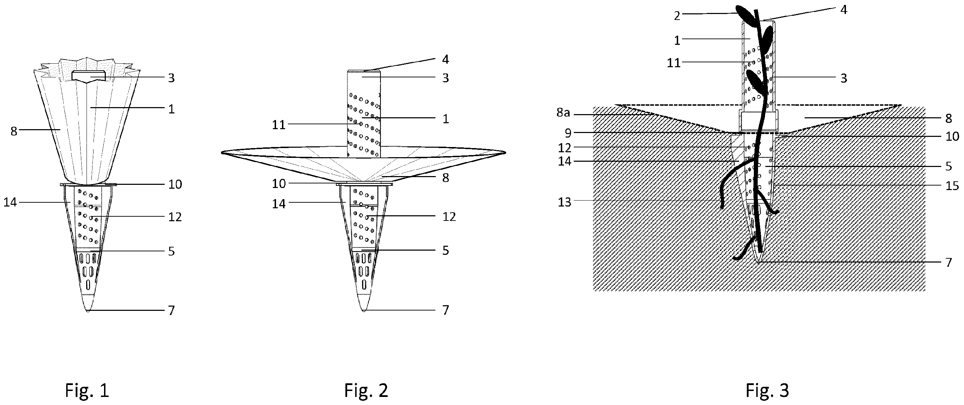

The invention will be illustrated by making use of the following non-limiting Figures 1-11.

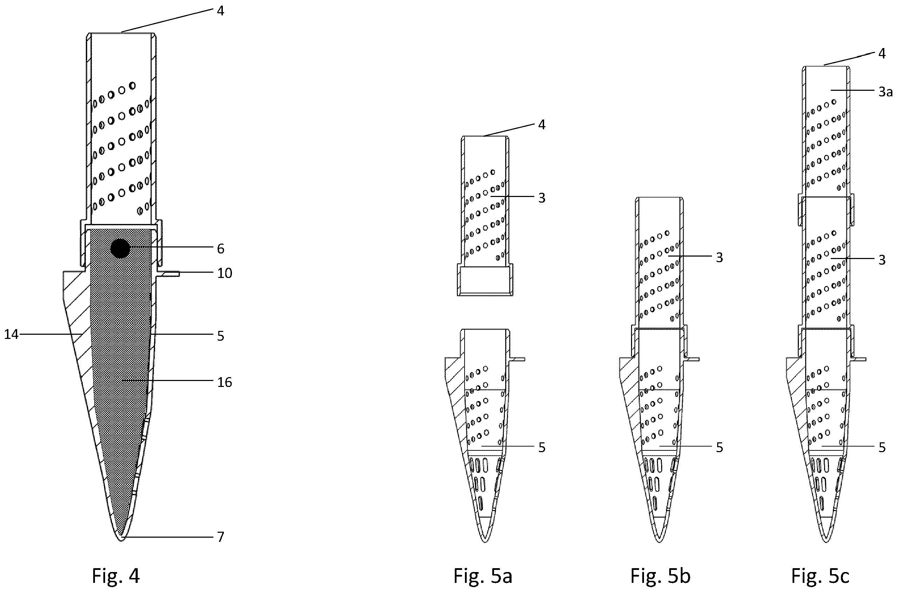

Figures 1-3 show a plantable device (1) for planting and growing a plant (2) comprising an elongated hollow shroud part (3) at a first end (4) which functions as a protective shield for the growing plant and a plug (5) comprising a plantable material (6) (see Figure 4) at a second end (7). Further an expandable anti-weed shield (8) is shown. Figure 1 and 2 show the plantable device (1) and Figure 3 shows the same plantable device as positioned in a planting pit in a cross-sectional view along its length. The anti-weed shield (8) as shown can fold and is in its compacted, folded, position in Figure 1 and in its expanded, unfolded, position in Figures 2 and 3.The anti-weed shield (8) is connected to the plantable device at a position (9) where the elongated shroud part (3) and the plug (5) are connected to each other. The plantable device (1) as shown is further provided with a flange (10). The elongated hollow shroud part (3) is provided with openings (11) and the plug (5) is provided with openings (12). Through openings (12) the roots (13) of the plant can pass into the surrounding soil (13) as shown in Figure 3. The plug (5) is provided with fins or ridges (14) which run in the axial direction and which function to firmly fix the plantable device (1) in a planting pit (15) as shown in Figure 3. In Figure 3 it is also shown that the anti-weed shield (8) has a frusto conical shape allowing rain water to flow from a distant position (8a) on the anti-weed shield to the plug (5).

Figure 4 shows a cross sectional view of the plantable device (1) of Figures 1-3 without the anti-weed shield (8). In this figure the interior of the plug (5) is shown in more detail wherein a seed as the plantable material (6) is shown comprised in a volume of substrate (16),

Figure 5a shows the plantable device (1) of Figure 4 wherein the elongated hollow shroud part (3) is shown separate from the plug (5). This to illustrate that these parts may be manufactured as separate parts and fitted onto each other before use. For example the plug (5) may be provided with the substrate (16) and seed (6) and subsequently the elongated hollow shroud part (3) is fitted onto the plug (3) to obtain the plantable device of Figure 5b. Connection between the two parts may be achieved by any known means of connection, like for example a screw connection, a clamping connection, a snap fit connection, welding and/or by means of an adhesive. In Figure 5c it is shown that a further elongated hollow shroud part (3a) is fitted onto the first elongated hollow shroud part (3) to obtain an extended elongated hollow shroud part (3). In this manner different plantable devices (1) having a different length of the elongated hollow shroud part (3) may be simply obtained. The first end (4) of the device of Figure 5c is thus further away from second end (7).

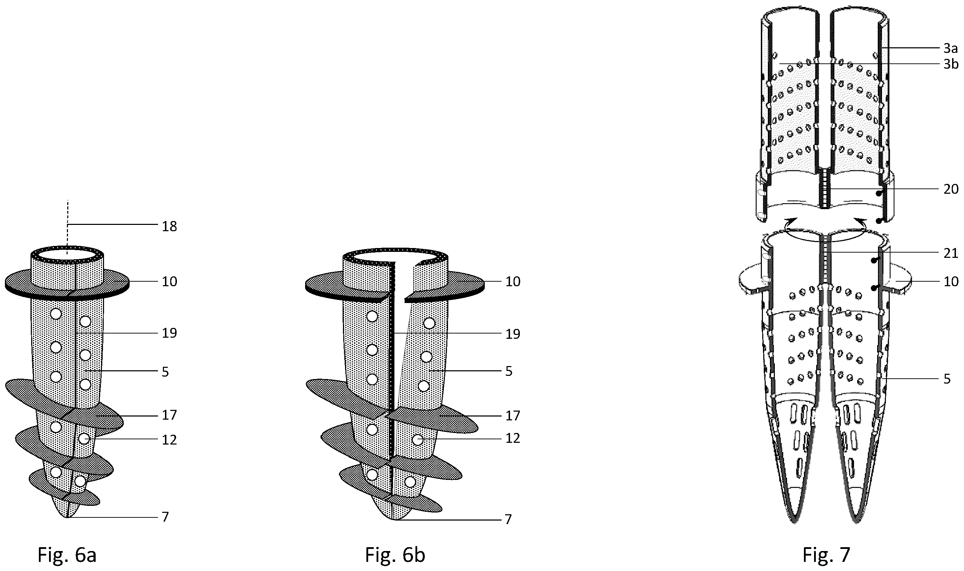

Figure 6a and 6b show an alternative plug (5) provided with ridges (17) are present which extend in an axial direction and under an angle with the axis of the plantable device (1). These ridges facilitate that the plantable device easily enters a planting pit (15) when a rotational motion is exercised to the planting device around its longitudinal axis (18). Through openings (12) the roots of the plant can pass into the surrounding soil. Instead of these openings the region of the shell between the ridges (17) may be provided with a material which degrades quicker than the ridges. The roots of the plant can pass into the surrounding soil through the thus formed openings. Figure 6b shows the same plug as in Figure 6a but now a slit (19) is shown to have opened when the roots start to grow. Such opening will allow roots of the plant to grow into the surrounding soil.

Figure 7 shows a hollow shroud part (3) and a plug (5) presented by two halves (3a,3b) and (5a,5b). These halves are connected by a living hinge (20) and (21) respectively. These living hinges (20,21) allow that the halves rotate towards each other thereby forming the hollow shroud part (3) and the plug (5). For this living hinge thin walls are used as compared to the wall thickness of the hollow shroud part (3) and the plug (5). The hollow shroud part (3) and the plug (5) are preferably manufactured in an expanded position by injection moulding and folded to their final shape after removal from the injection moulding mould. Such a method of manufacturing enables one to use simpler moulds and a stackable intermediate product is obtained.

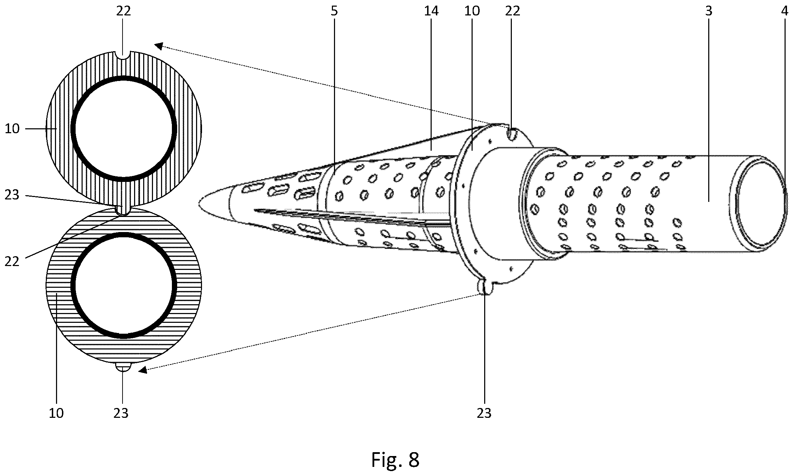

Figure 8 shows a plantable device (1) provided with a flange (10) wherein the flange is provided with a female opening (22) and a male extension (23). These female opening (22) and male extension (23) enable to connect the plantable device (1) to a next plantable device (1) having the same female opening (22) and a male extension (23). In this manner a row of connected plantable devices (1) may be obtained, for example as cartridges of plantable devices, as schematically illustrated by the cross-sectional view shown on the left.

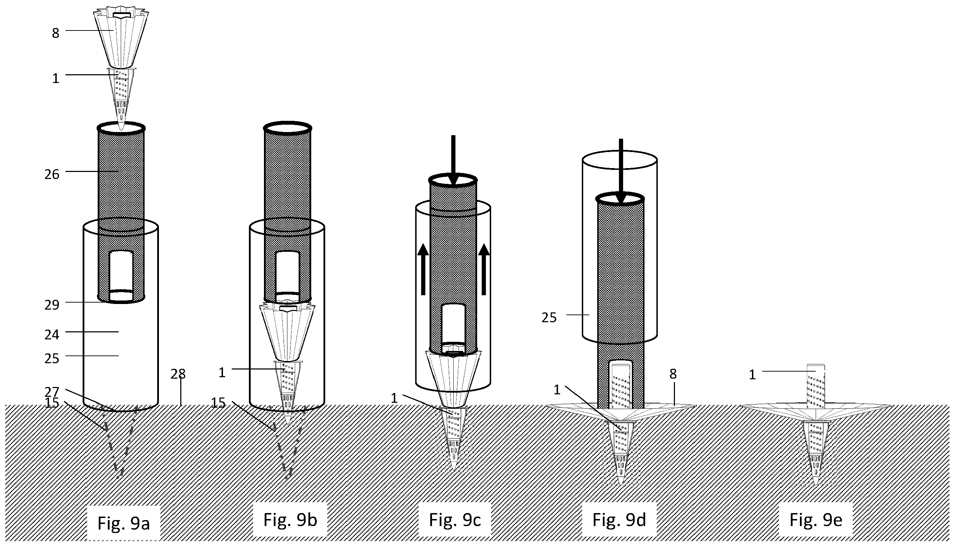

Figure 9 shows how a plantable device (1) of Figures 1-3 may be positioned in a planting pit (15). Planting pit (15) is prepared and a planting aid (24) is positioned vertically above the planting pit (15) as shown in Figure 9a. The planting aid (24) consists of an outer tube (25) and a moveable inner tube (26) positioned and moveable with said outer tube (25). At the start the lower end (27) of the outer tube is substantially at the surface (28) of the soil. The lower end (29) of the inner tube (25) is spaced away from said surface (28) for about the length of the plantable device (1). The plantable device (1) having its anti-weed shield (8) in a compacted position moves by gravity through inner tube (26) and through outer tube (25) until it partly enters the planting pit (15) as shown in Figure 9b. Because the plantable device has left the inner tube (26) the anti-weed shield partly expands. In a next step the outer tube (25) moves upwards and the inner tube (26) moves downwards. Because the anti-weed shield (8) has partly expanded the lower end (29) of the inner tube pushes the anti-weed shield into its expanded position while simultaneously pushing the plantable device downward into the planting pit (15) as shown in Figure 9d. The outer tube (25) should be at an elevated position such that the anti-weed shield (8) may expand. Once the plantable device is positioned the planting aid (24) is removed as shown in Figure 9e and the process for planting plantable material is completed.

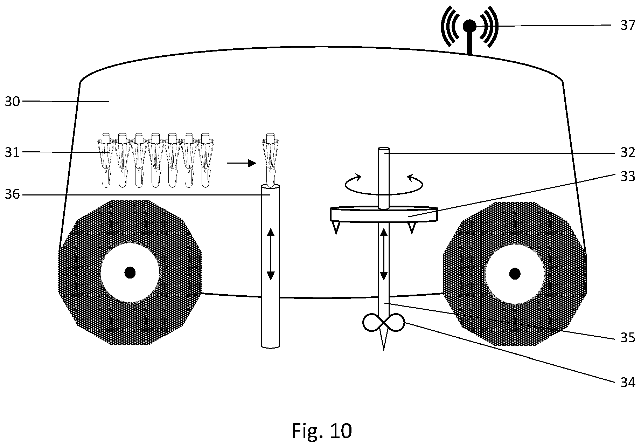

Figure 10 shows an unmanned land vehicle (30) suited to perform the process shown in Figure 9. The vehicle (30) has a dispenser (31) comprising an inventory of plantable devices (1) of Figures 1-3. A subsoiler (32) is shown provided with an anti-weed disc (33) and a single blade auger (34) along a shared axis (35). The anti-weed disc (33) and the auger (34) may be individually moved downwards to the soil surface to remove weeds and prepare the planting pit. Further a plantable device installer (36) is shown which may be the planting aid (24) of Figure 9. The vehicle is further provided with communication means (37).

In use a controller will be part of the vehicle which is programmed to activate the subsoiler at a pre-programmed planting position to prepare a planting pit, programmed to activate the plantable device installer to select a plantable device from the inventory and position the plantable device in the planting pit and programmed to move the vehicle from one pre-programmed planting position to another pre-programmed planting position after positioning a plantable device. Positioning coordinate data, like GPS data, may be used as input.

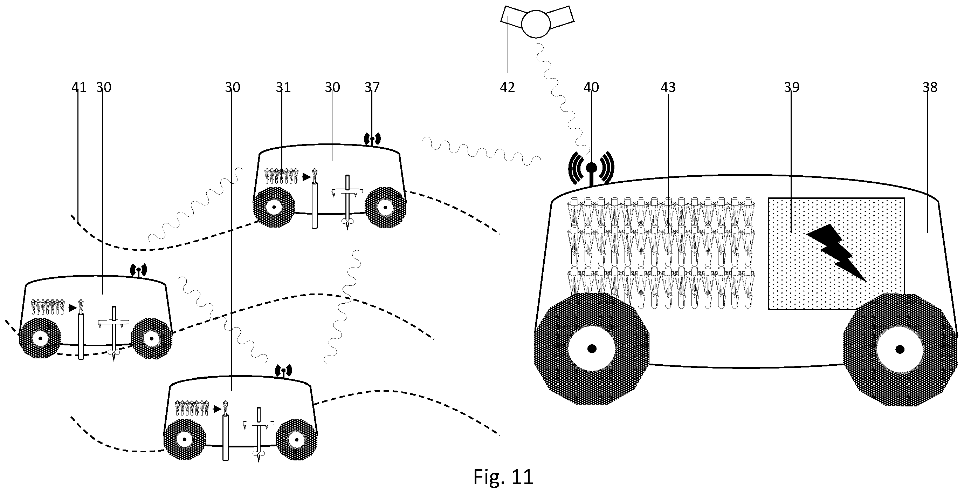

Figure 11 shows a system comprising of more than one vehicle (30) having electric propulsion of Figure 10 and a base vehicle (38). The base vehicle (38) has recharging facilities (39) for recharging an individual vehicle (30). Further the base vehicle (38) has a base inventory (43) of plantable devices to replenish the inventory of a dispenser (31) of an individual vehicle (30). Further the base vehicle (38) has communication means (40) for data exchange and for control instructions between the more than one vehicle as present in the area of land (41) where the plantable material is planted and for receiving Positioning coordinate data, like GPS data (42) .

## Claims

1. Land vehicle (30) for unmanned usage, comprising
a dispenser (31) comprising an inventory of suitably between 50 and 500 plantable devices (1) for planting and growing a plant,
a subsoiler (32),
a plantable device installer (36) and
a controller programmed to activate the subsoiler (32) at a pre-programmed planting position to prepare a planting pit, programmed to activate the plantable device installer (36) to select a plantable device (1) from the inventory and position the plantable device (1) in the planting pit and programmed to move the vehicle (30) from one pre-programmed planting position to another pre-programmed planting position after positioning a plantable device (1), **characterised in that**
each plantable device (1) comprises at a first end (4) an elongated hollow shroud part (3) which functions as a protective shield for the growing plant and at a second end (7) a plug (6) comprising one or more seeds and/or micro-propagated plant material (5), and
each plantable device (1) further comprises an anti-weed shield (8) that can adopt a compacted configuration and an expanded configuration, wherein when the plantable device (1) is comprised in the dispenser (31) its anti-weed shield (8) is in its compacted configuration.

2. Vehicle according to claim 1, further provided with one or more reservoirs for plant growth supporting substances.

3. Vehicle according to any one of claims 1-2, wherein the one or more seeds and/or micro-propagated plant material are those of a woody plant species.

4. System comprising of more than one vehicle (30) according to any one of claims 1-3 having an electric propulsion, a base vehicle (38), wherein the base vehicle (38) comprises recharging facilities for recharging or refuelling an individual vehicle (30) of the one or more vehicles (30) and a base inventory (43) of plantable devices (1) to replenish the inventory of an individual vehicle (30) of the one or more vehicles (30); and communication means (40) for data exchange and for control instructions between the more than one vehicle (30) and the base vehicle (38).

5. Process for planting plantable material in an area of land by performing the following steps,
(a) providing an inventory of numerous plantable devices (1) for planting and growing a plant comprising at a first end (4) of each plantable device (1) an elongated hollow shroud part (3) which functions as a protective shield for the growing plant and at a second end (7) of each plantable device a plug (6) comprising a seed or seeds or micro-propagated plant material (5),
(b) preparing a planting pit (15),
(c) selecting a plantable device (1) from the inventory and positioning the plug (6) of the plantable device (1) in the planting pit (15), wherein the hollow shroud part (3) extends upwardly from the plug (6) above soil,
wherein steps (b) and (c) are repeated at different locations in the area of land for all or part of the remaining inventory of plantable devices (1), **characterised in that**
the plantable device (1) further comprises an anti-weed shield (8) that can adopt a compacted configuration and an expanded configuration.

6. Process according to claim 5, wherein in step (b) a herbicide is added to the soil surrounding the planting pit.

7. Process according to any one of claims 5-6, wherein the plug (6) comprises a shell defining an interior and an exterior of the plug (6) and wherein the shell is comprised of a biodegradable material and wherein the shell is provided with openings (12) and/or slits (19) for roots (13) of a plant to grow from the interior to the exterior of the plug (6) and wherein the shell of the plug is manufactured as two halves (5a, 5b), in the length direction between first and second end.

8. Process according to any one of claims 5-7, wherein the one or more seeds or the micro-propagated plant material (5) are those of a woody plant species.

9. Process according to any one of claims 5-8, wherein the process is performed in an automatic fashion wherein pre-programmed planting positions for the one or more different plant species are set and wherein a land vehicle (30) for unmanned usage according to any of claims 1-3 moves from one programmed planting position to another programmed planting position for performing steps (b) and (c).

10. Process according to claim 9, wherein the pre-programmed planting positions may alter because of unfavourable planting conditions as measured by the land vehicle (30) for unmanned usage when arriving at the pre-programmed planting position and/ or that the routing between pre-programmed planting positions may alter because of unfavourable terrain conditions as measured by the moveable inventory.

11. Process according to claim 10, wherein the process is performed by a group of more than one land vehicle (30) for unmanned usage and wherein the unfavourable planting conditions and/or the unfavourable terrain conditions as measured by one of the land vehicles (30) for unmanned usage is used as input for a reprogrammer to optimise the pre-programmed planting positions and/or the routing from one pre-programmed planting position to a next pre-programmed planting position for the group of land vehicles (30) for unmanned usage.

12. Process according to any one of claims 8-11, wherein the one or more land vehicles (30) for unmanned usage position numerous of the plantable devices (1), wherein at least a part of the numerous plantable devices (1) comprise a different plant species than another part of the numerous plantable devices (1).

13. Use of the vehicle (30) according to any one of claims 1-3 in a process according to any one of claims 5-12.

## Patentansprüche

1. Landfahrzeug (30) für die unbemannte Nutzung, umfassend
einen Spender (31), umfassend einen Bestand von 50 bis 500 pflanzbaren Vorrichtungen (1) zum Pflanzen und Wachsen einer Pflanze,
einen Tiefen lockerer (32),
eine Installationsvorrichtung für pflanzbare Vorrichtungen (36) und
eine Steuerung, die so programmiert ist, dass sie den Tiefenlockerer (32) an einer vorprogrammierten Pflanzposition aktiviert, um eine Pflanzgrube vorzubereiten, die so programmiert ist, dass sie die Installationsvorrichtung (36) für pflanzbare Vorrichtungen aktiviert, um eine pflanzbare Vorrichtung (1) aus dem Bestand auszuwählen und die pflanzbare Vorrichtung (1) in der Pflanzgrube zu positionieren, und die so programmiert ist, dass sie das Fahrzeug (30) nach dem Positionieren einer pflanzbaren Vorrichtung (1) von einer vorprogrammierten Pflanzposition zu einer anderen vorprogrammierten Pflanzposition bewegt, **dadurch gekennzeichnet, dass**
jede pflanzbare Vorrichtung (1) an einem ersten Ende (4) ein längliches hohles Abdeckteil (3), das als Schutzschild für die wachsende Pflanze fungiert, und an einem zweiten Ende (7) einen Stopfen (6) umfasst, umfassend ein oder mehrere Samen und/oder mikropropagiertes Pflanzenmaterial (5), und
jede pflanzbare Vorrichtung (1) ferner einen Unkrautschutzschild (8) umfasst, der eine verdichtete Konfiguration und eine erweiterte Konfiguration annehmen kann, wobei, wenn die pflanzbare Vorrichtung (1) in dem Spender (31) enthalten ist, ihr Unkrautschutzschild (8) in seiner verdichteten Konfiguration ist.

2. Fahrzeug nach Anspruch 1, ferner mit einem oder mehreren Behältern für das Pflanzenwachstum fördernde Substanzen bereitgestellt.

3. Fahrzeug nach einem der Ansprüche 1 bis 2, wobei das eine oder die mehreren Samen und/oder das mikrovermehrte Pflanzenmaterial von einer holzigen Pflanzenart stammen.

4. System umfassend mehr als ein Fahrzeug (30) nach einem der Ansprüche 1 bis 3 mit einem elektrischen Antrieb, ein Grundfahrzeug (38), wobei das Grundfahrzeug (38) Aufladeeinrichtungen zum Aufladen oder Betanken eines einzelnen Fahrzeugs (30) des einen oder der mehreren Fahrzeuge (30) und einen Grundbestand (43) an pflanzbaren Vorrichtungen (1) zum Auffüllen des Bestands eines einzelnen Fahrzeugs (30) des einen oder der mehreren Fahrzeuge (30) umfasst; und Kommunikationsmittel (40) für den Datenaustausch und für Steueranweisungen zwischen den mehreren Fahrzeugen (30) und dem Basisfahrzeug (38).

5. Prozess zum Bepflanzen einer Landfläche mit pflanzbarem Material durch Ausführen der folgenden Schritte,
(a) Bereitstellen eines Bestandes zahlreicher pflanzbarer Vorrichtungen (1) zum Pflanzen und Züchten einer Pflanze, umfassend an einem ersten Ende (4) jeder pflanzbaren Vorrichtung (1) ein längliches, hohles Abdeckteil (3), das als Schutzschild für die wachsende Pflanze fungiert, und an einem zweiten Ende (7) jeder pflanzbaren Vorrichtung einen Stopfen (6), der einen Samen oder Samen oder mikropropagiertes Pflanzenmaterial (5) enthält,
(b) Vorbereiten einer Pflanzgrube (15),
(c) Auswählen einer pflanzbaren Vorrichtung (1) aus dem Inventar und Positionieren des Stopfens (6) der pflanzbaren Vorrichtung (1) in der Pflanzgrube (15), wobei sich der hohle Abdeckteil (3) von dem Stopfen (6) nach oben über den Boden erstreckt,
wobei die Schritte (b) und (c) für den gesamten oder einen Teil des verbleibenden Bestandes an pflanzbaren Vorrichtungen (1) an verschiedenen Stellen des Grundstücks wiederholt werden, **dadurch gekennzeichnet, dass**
die pflanzbare Vorrichtung (1) ferner einen Unkrautschutzschild (8) umfasst, der eine verdichtete Konfiguration und eine erweiterte Konfiguration annehmen kann.

6. Prozess nach Anspruch 5, wobei in Schritt (b) ein Herbizid in den die Pflanzgrube umgebenden Boden eingebracht wird.

7. Prozess nach einem der Ansprüche 5 bis 6, wobei der Stopfen (6) eine Schale umfasst, die ein Inneres und ein Äußeres des Stopfens (6) definiert, und wobei die Schale ein bioabbaubares Material umfasst und wobei die Schale mit Öffnungen (12) und/oder Schlitzen (19) versehen ist, damit Wurzeln (13) einer Pflanze vom Inneren zum Äußeren des Stopfens (6) wachsen können, und wobei die Schale des Stopfens als zwei Hälften (5a, 5b) in der Längsrichtung zwischen dem ersten und dem zweiten Ende hergestellt wird.

8. Prozess nach einem der Ansprüche 5 bis 7, wobei der eine oder die mehreren Samen oder das mikrovermehrte Pflanzenmaterial (5) von einer holzigen Pflanzenart stammen.

9. Prozess nach einem der Ansprüche 5 bis 8, wobei der Prozess automatisch durchgeführt wird, wobei vorprogrammierte Pflanzpositionen für die eine oder mehrere verschiedene Pflanzenarten eingestellt werden und wobei ein Landfahrzeug (30) zur unbemannten Nutzung nach einem der Ansprüche 1 bis 3 sich von einer programmierten Pflanzposition zu einer anderen programmierten Pflanzposition bewegt, um die Schritte (b) und (c) durchzuführen.

10. Prozess nach Anspruch 9, wobei sich die vorprogrammierten Pflanzpositionen aufgrund ungünstiger Pflanzbedingungen ändern können, die von dem Landfahrzeug (30) für unbemannte Nutzung bei der Ankunft an der vorprogrammierten Pflanzposition gemessen werden, und/oder dass sich das Routing zwischen vorprogrammierten Pflanzpositionen aufgrund ungünstiger Geländebedingungen ändern kann, die von dem beweglichen Bestand gemessen werden.

11. Prozess nach Anspruch 10, wobei der Prozess von einer Gruppe von mehr als einem Landfahrzeug (30) zur unbemannten Nutzung durchgeführt wird und wobei die ungünstigen Pflanzbedingungen und/oder die ungünstigen Geländebedingungen, wie sie von einem der Landfahrzeuge (30) zur unbemannten Nutzung gemessen werden, als Eingabe für einen Umprogrammierer verwendet werden, um die vorprogrammierten Pflanzpositionen und/oder das Routing von einer vorprogrammierten Pflanzposition zu einer nächsten vorprogrammierten Pflanzposition für die Gruppe von Landfahrzeugen (30) zur unbemannten Nutzung zu optimieren.

12. Prozess nach einem der Ansprüche 8 bis 11, wobei das eine oder die mehreren Landfahrzeuge (30) zur unbemannten Nutzung zahlreiche der pflanzbaren Vorrichtungen (1) positionieren, wobei zumindest ein Teil der zahlreichen pflanzbaren Vorrichtungen (1) eine andere Pflanzenart umfasst als ein anderer Teil der zahlreichen pflanzbaren Vorrichtungen (1).

13. Nutzung des Fahrzeugs (30) nach einem der Ansprüche 1 bis 3 in einem Prozess nach einem der Ansprüche 5 bis 12.

## Revendications

1. Véhicule terrestre (30) pour utilisation sans équipage, comprenant
un distributeur (31) comprenant un stock de 50 à 500 dispositifs à planter (1) appropriés permettant de planter et faire croître une plante,
une sous-soleuse (32),
un installateur de dispositif à planter (36) et
un dispositif de commande programmé pour activer la sous-soleuse (32) au niveau d'une position de plantation préprogrammée pour préparer une fosse de plantation, programmé pour activer l'installateur de dispositif à planter (36) pour sélectionner un dispositif à planter (1) à partir du stock et positionner le dispositif à planter (1) dans la fosse de plantation et programmé pour déplacer le véhicule (30) d'une position de plantation préprogrammée vers une autre position de plantation préprogrammée après le positionnement d'un dispositif à planter (1), **caractérisé en ce que**
chaque dispositif à planter (1) comprend au niveau d'une première extrémité (4) une partie enveloppe creuse allongée (3) qui sert d'écran de protection pour la plante en croissance et au niveau d'une seconde extrémité (7) un bouchon (6) comprenant une ou plusieurs graines et/ou un matériel végétal micropropagé (5), et
chaque dispositif à planter (1) comprend en outre un écran anti-mauvaise herbe (8) qui peut adopter une configuration compacte et une configuration étendue, dans lequel, lorsque le dispositif à planter (1) est compris dans le distributeur (31), son écran anti-mauvaise herbe (8) se trouve dans sa configuration compacte.

2. Véhicule selon la revendication 1, pourvu en outre d'un ou plusieurs réservoirs pour des substances favorisant la croissance des plantes.

3. Véhicule selon l'une quelconque des revendications 1 à 2, dans lequel la ou les graines et/ou le matériel végétal micropropagé sont ceux d'une espèce de plante ligneuse.

4. Système comprenant plus d'un véhicule (30) selon l'une quelconque des revendications 1 à 3 ayant une propulsion électrique, un véhicule de base (38), dans lequel le véhicule de base (38) comprend des installations de recharge pour recharger ou ravitailler en combustible un véhicule individuel (30) du ou des véhicules (30) et un stock de base (43) de dispositifs à planter (1) pour réapprovisionner le stock d'un véhicule individuel (30) du ou des véhicules (30) ; et un moyen de communication (40) pour un échange de données et pour des instructions de commande entre les plus d'un véhicule (30) et le véhicule de base (38).

5. Processus de plantation de matériel à planter dans une zone de terre en réalisant les étapes suivantes,
(a) la fourniture d'un stock de nombreux dispositifs à planter (1) pour planter et faire croître une plante comprenant, au niveau d'une première extrémité (4) de chaque dispositif à planter (1), une partie enveloppe creuse allongée (3) qui sert d'écran de protection pour la plante en croissance et, au niveau d'une seconde extrémité (7) de chaque dispositif à planter, un bouchon (6) comprenant une ou plusieurs graines ou du matériel végétal micropropagé (5),
(b) la préparation d'une fosse de plantation (15),
(c) la sélection d'un dispositif à planter (1) dans le stock et le positionnement du bouchon (6) du dispositif à planter (1) dans la fosse de plantation (15), dans lequel la partie enveloppe creuse (3) s'étend vers le haut à partir du bouchon (6) au-dessus du sol,
dans lequel les étapes (b) et (c) sont répétées à différents endroits de la zone de terre pour tout ou une partie du stock restant de dispositifs à planter (1), **caractérisé en ce que**
le dispositif à planter (1) comprend en outre un écran anti-mauvaise herbe (8) qui peut adopter une configuration compacte et une configuration élargie.

6. Procédé selon la revendication 5, dans lequel, à l'étape (b), un herbicide est ajouté au sol entourant la fosse de plantation.

7. Procédé selon l'une quelconque des revendications 5 à 6, dans lequel le bouchon (6) comprend une coque définissant un intérieur et un extérieur du bouchon (6) et dans lequel la coque est constituée d'un matériau biodégradable et dans lequel la coque est pourvue d'ouvertures (12) et/ou de fentes (19) pour que des racines (13) d'une plante puissent croître de l'intérieur vers l'extérieur du bouchon (6) et dans lequel la coque du bouchon est fabriquée en deux moitiés (5a, 5b), dans le sens de la longueur entre la première et la seconde extrémité.

8. Procédé selon l'une quelconque des revendications 5 à 7, dans lequel la ou les graines ou le matériel végétal micropropagé (5) sont ceux d'une espèce de plante ligneuse.

9. Procédé selon l'une quelconque des revendications 5 à 8, dans lequel le procédé est réalisé de manière automatique, dans lequel des positions de plantation préprogrammées pour la ou les espèces de plantes différentes sont définies et dans lequel un véhicule terrestre (30) pour utilisation sans équipage selon l'une quelconque des revendications 1 à 3 se déplace d'une position de plantation programmée vers une autre position de plantation programmée pour réaliser les étapes (b) et (c).

10. Procédé selon la revendication 9, dans lequel les positions de plantation préprogrammées peuvent être modifiées en raison de conditions de plantation défavorables telles que mesurées par le véhicule terrestre (30) pour utilisation sans équipage lorsqu'il arrive au niveau de la position de plantation préprogrammée et/ou que l'itinéraire entre les positions de plantation préprogrammées peut être modifié en raison de conditions de terrain défavorables telles que mesurées par le stock mobile.

11. Procédé selon la revendication 10, dans lequel le procédé est réalisé par un groupe de plus d'un véhicule terrestre (30) pour utilisation sans équipage et dans lequel les conditions de plantation défavorables et/ou les conditions de terrain défavorables telles que mesurées par l'un des véhicules terrestres (30) pour utilisation sans équipage sont utilisées comme entrée pour un dispositif de reprogrammation afin d'optimiser les positions de plantation préprogrammées et/ou l'itinéraire d'une position de plantation préprogrammée vers une position de plantation préprogrammée suivante pour le groupe de véhicules terrestres (30) pour utilisation sans équipage.

12. Procédé selon l'une quelconque des revendications 8 à 11, dans lequel le ou les véhicules terrestres (30) pour utilisation sans équipage positionnent de nombreux dispositifs à planter (1), dans lequel au moins une partie des nombreux dispositifs à planter (1) comprend une espèce de plante différente d'une autre partie des nombreux dispositifs à planter (1).

13. Utilisation du véhicule (30) selon l'une quelconque des revendications 1 à 3 dans un procédé selon l'une quelconque des revendications 5 à 12.
